# EUROPÄISCHE PATENTSCHRIFT

(11) **EP 1 375 972 B1**
(45) Veröffentlichungstag und Bekanntmachung des Hinweises auf die Patenterteilung: **26.04.2006**
(21) Anmeldenummer: 03007514.7
(22) Anmeldetag: 01.04.2003
(51) Int. Cl.: F16H 59/02, B60R 11/02, B60K 37/06

(54) **Schalthebel für Kraftfahrzeuggetriebe**
Gear shift lever for motor vehicle gearbox
Levier de changement de vitesses pour boîte de vitesses de véhicule

(30) Priorität: 22.06.2002 DE 10227991
(43) Veröffentlichungstag der Anmeldung: 02.01.2004
(73) Patentinhaber: ROBERT BOSCH GMBH, 70442 Stuttgart (DE)
(72) Erfinder: Strohmeier, Wolfgang, 31137 Hildesheim (DE); Nolting, Manfred, 31171 Nordstemmen (DE); Wendling, Hartmut, 31137 Hildesheim (DE)

(56) Entgegenhaltungen:
- EP-A- 0 629 526
- WO-A-02/30090
- DE-A- 10 013 054

## Beschreibung

Die Erfindung betrifft einen Schalthebel für Kraftfahrzeuggetriebe.

Aus dem Stand der Technik sind Fernbedienungen zur Bedienung unterschiedlicher Funktionen in Autoradios, Navigationsgeräten und anderen elektronischen Geräten in Fahrzeugen bekannt. Diese Fernbedienungen haben unterschiedliche Signalcharakteristika und können als Infrarot-, Ultraschall- oder Funksignalfernbedienungen ausgebildet sein. Es sind sowohl ortsungebundene als auch fest montierte Fernbedienungen aus dem Stand der Technik bekannt, wobei die fest montierten Fernbedienungen vorzugsweise am Lenkradkranz, am Lenkradpralltopf, an der Lenksäule, am lenkradnahen Instrumententafelbereich, im unteren Konsolenbereich und in der Fahrerarmlehne montiert sind.

Um Fahrerinformationssysteme bzw. Unterhaltungselektronikgeräte schnell und sicher bedienen zu können, ist es notwendig, die Bedienungselemente im griffnahen Bereich vorzusehen, damit der Fahrer sich voll auf die eigentliche Aufgabe, nämlich das Führen des Fahrzeuges, konzentrieren kann. Die Möglichkeit das Lenkrad für eine Festmontage von Fernbedienungselementen zu nutzen nimmt ab, weil sequentielle Schaltgetriebe zunehmend Verbreitung finden und der Lenkradkranz zum Anordnen der Schaltwippen benötigt wird. Ebenfalls ist der Platz am Rand des Lenkradpralltopfes für andere Bedienelemente häufig schon belegt.

Aus der DE 196 47 460 A1 ist eine Steuervorrichtung für ein elektronisches Gerät bekannt, das gelenkig über eine Schelle mit einem Schalthebel für ein Kraftfahrzeuggetriebe verbunden ist. Gegenüber dem Fahrzeugboden ist die Vorrichtung über einen Gelenkhebel abgestützt, so dass bei der Betätigung des Schalthebels die Vorrichtung mitschwenken kann. Diese Lösung benötigt relativ viel Platz und setzt eine ästhetische Kompromissbereitschaft voraus.

Aus der DE 100 13 054 A1 ist eine Bedieneinheit für Multi-Media-Komponenten in einem Kraftfahrzeug bekannt, die mittels einer Schwanenhalskonstruktion im Bereich einer Verlängerung einer Mittelarmlehne zwischen dem Schalthebel und der Mittelarmlehne oder auch direkt am Schalthebel befestigt sein kann. Die Bedieneinheit ist leicht von der Schwanenhalskonstruktion abnehmbar und mit einer Pufferbatterie ausgestattet. Femer ist eine Funkschnittstelle in der Bedieneinheit integriert, so dass auch bei abgenommener Bedieneinheit diese für die Bedienung von Multimediakomponenten als Funkfernsteuerung benutzt werden kann.

Aus der gattungsbildenden EP 629 526 A1 ist ein Schalthebel für ein Fahrzeug bekannt, an dem eine Vielzahl von Kontrolleinheiten angeordnet sind. Insbesondere dient der Kopf des Schalthebels als Halteelement für eine herkömmliche Fernbedienungseinheit für das Radio, einen CD-Spieler oder einen Kassetten-Spieler im Fahrzeug. Daher können auch andere Druckschalter an dem Schalthebel angeordnet sein.

Aus der WO 02/30090 A1 ist ein elektrisches Gerät mit einer Anzeige bekannt, die durch eine verschiebbare Jalousie verschlossen werden kann.

Ausgehend von diesem Stand der Technik liegt der Erfindung die Aufgabe zugrunde, Bedienungselemente einer Fernbedienung ergonomisch optimal und ästhetisch ansprechend in einem Kraftfahrzeug unterzubringen.

Erfindungsgemäß wird diese Aufgabe durch einen Schalthebel für Kraftfahrzeuggetriebe mit den Merkmalen des Anspruchs 1 gelöst. Vorteilhafte Weiterbildungen und Ausgestaltungen sind in den Unteransprüchen beschrieben.

Durch die Integration der Bedienungselemente einer Fernbedienung für Muttergeräte der Unterhaltungs- und /oder Informationselektronik in den Schalthebel ist es möglich, die Bedienung eines Autoradios, eines Navigationsgerätes oder dergleichen an eine ergonomisch günstige Position zu verlegen. Dadurch wird es möglich, die Muttergeräte an einem Ort innerhalb des Kraftfahrzeuges unterzubringen, der sich nicht im Greifraum des Fahrers befinden. Hierdurch werden die Möglichkeiten der Gestaltung des Fahrzeuginnenraumes erhöht und eine physiologische Entlastung der kinematischen Gelenkkette des Hand-Arm-Systems bewirkt.

Darüber hinaus erlaubt die Anordnung der Bedienungselemente einer Fernbedienung im Schalthebel des Kraftfahrzeuges dem Beifahrer einen leichten Zugriff, ohne sich beispielsweise übermäßig nach vorne beugen zu müssen.

Gegenüber einer ortsungebundenen Fernbedienung hat eine fest im Fahrzeug montierte Fernbedienung den Vorteil, dass sie sicher geortet werden kann. Dies gilt insbesondere bei Nachtfahrten. Beim Entstehen verkehirsbedingter Stresssituationen mit notwendiger vollständiger Konzentration auf den Lenkprozess muss eine ortsgebundene Fernbedienung nicht abgelegt werden und fliegt im Falle eines Unfalles nicht frei durch den Fahrzeuginnenraum.

Die Bedienungselemente sind auf der Schalthebeloberseite und den Seitenflächen des Schalthebels angeordnet. Um beim Schaltvorgang nicht irrtümlich die Bedienungselemente zu betätigen, sind diese vorteilhafterweise versenkt montiert.

Eine weitere Sicherung gegen unbeabsichtigtes Betätigen der Bedienungselemente ist in Gestalt einer Abdeckvorrichtung vorgesehen, die an dem Schalthebel montiert ist bzw. in diesem integriert ist. Solch eine Abdeckung ist vorteilhafterweise als eine verschiebbare Jalousie ausgebildet, die im Sicherungszustand die Bedienungselemente vollständig abdeckt.

Vorteilhafterweise ist eine Sendeschnittstelle für eine drahtlose Signalübertragung zum Muttergerät in den Schalthebel integriert, so dass auf eine aufwendige Verkabelung verzichtet werden kann. Die Sendeschnittstelle ist als Bluetooth-Schnittstelle ausgebildet, wodurch der Signaltransfer über richtungsungebundene Signale erfolgt. Andere Übertragungssysteme bzw. Verfahren zur Übertragung von Signalen kurzer Reichweite können alternativ vorgesehen werden.

Vorteilhafterweise ist der Schalthebel als ein nachrüstbares Zubehörteil mit integrierter Sendeeinrichtung ausgebildet, um auch bei einem bereits komplett ausgestatteten Instrumenten- oder Konsolenbereich eine optimale Bedienung der elektronischen Geräte zu ermöglichen, ohne die vorhandene Konzeption des Innenraumes zu stören. Die Störung bezieht sich sowohl auf den ästhetischen als auch auf den technischen Bereich.

Der Schalthebel weist entweder eine integrierte Energieversorgung oder Anschlusselemente zu einem Kraftfahrzeug-Energiesystem auf, um die Sendeeinrichtung mit entsprechender Energie versorgen zu können.

Nachfolgend werden Ausführungsbeispiele anhand der beigefügten Figuren erläutert werden. Es zeigen:
- Figuren 1 a und 1 b -: Ansichten eines ersten Ausführungsbeispieles; sowie
- Figuren 2a und 2b -: Ansichten eines zweiten Ausführungsbeispieles eines Schalthebels, der aber kein Teil der Erfindung ist.

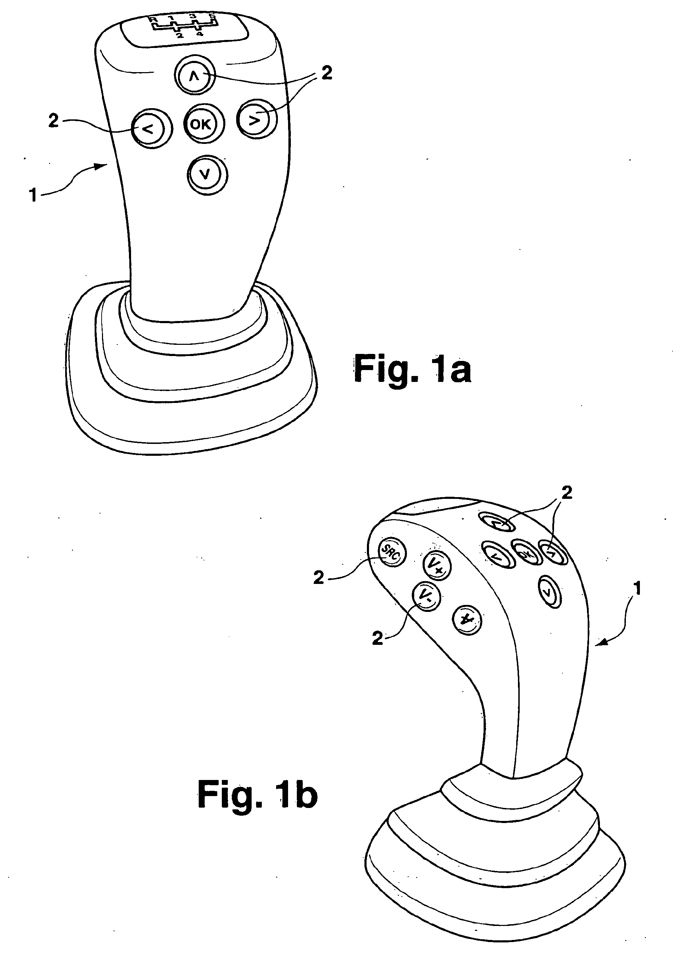

Figur 1 a zeigt einen Schalthebel 1 in Seitenansicht und Figur 1 b den Schalthebel 1 in einer Schrägdraufsicht. In Figur 1a ist gut zu erkennen, dass Bedienungselemente 2 in Gestalt von versenkt angeordneten Drucktasten auf der Schalthebeloberseite unterhalb einer Schaltbildeinlage angeordnet sind. Auf der Oberseite des Schalthebels 1 sind in dem dargestellten Ausführungsbeispiel Richtungstasten zur Auswahl eines Menüs oder Orientierung in einer Auswahlstruktur angeordnet; in der Mitte der Richtungstasten 2 ist eine Bestätigungstaste angeordnet, mit der die getroffene Auswahl bestätigt werden kann.

Die Figur 1 b zeigt an der linken, konkav ausgebildeten Seitenfläche des Schalthebels 1 angeordnete Bedienelemente 2, die Grundfunktionen eines Radios steuern. Während das vordere Bedienelement 2 eine Auswahl hinsichtlich der Musikquelle zulässt, sind die beiden übereinander angeordneten Bedienelemente 2 zur Vergrößerung bzw. Verringerung der Lautstärke und das letzte Bedienelement 2 an der Seitenfläche des Schalthebels 1 zur Stummschaltung vorgesehen. Das vordere Bedienelement 2 an der Seitenfläche des Schalthebels 1 kann auch allgemein zur Auswahl des zu steuernden Gerätes dienen, so z. B. der Auswahl zwischen einem Navigationssystem, einem Fahrerinformationssystem oder einem Unterhaltungselektronikgerät.

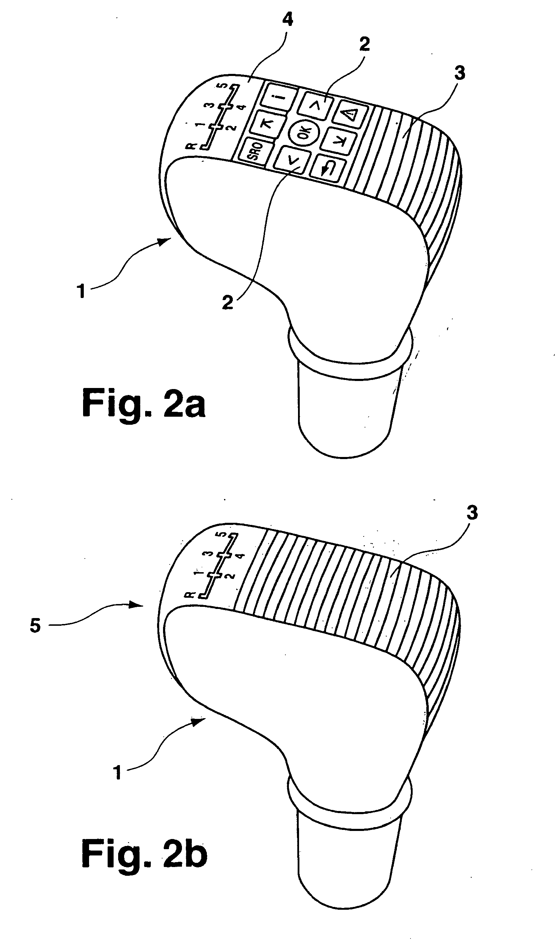

Eine Variante, die kern Teil der Erfindung ist, ist in den Figuren 2a und 2b gezeigt, in denen die auf der Schalthebeloberseite angeordneten Bedienelemente über eine als Jalousie ausgebildete Abdeckeinrichtung 3 verschlossen werden können. Die Figur 2a zeigt den Schalthebel 1 in einer Stellung, in der die Jalousie 3 zurückgefahren ist, in der Figur 2b sind die Bedienelemente 2 durch die geschlossene Jalousie 3 abgedeckt.

Unterhalb der Schaltbildeinlage ist die Laufschiene 4 für die Jalousie 3 ausgebildet und auf der Schalthebeloberfläche sind insgesamt neun Bedienelemente 2 angeordnet, mit denen die entsprechenden Geräte und Einrichtungen innerhalb des Fahrzeuges ferngesteuert werden können. An der Vorderseite des Schalthebels 1 ist eine Sendeschnittstelle 5 ausgebildet, ebenfalls ist darunter eine Batteriefachabdeckung ausgebildet, um die Energieversorgung der nicht dargestellten Sendeeinrichtung sicherzustellen. Durch eine solche Ausgestaltung ist es möglich, dass der Schalthebel 1 eine eigenständige Fernbedienung ausbildet, die beispielsweise über ein Schraubgewinde an alle üblichen Kraftfahrzeuggetriebe gekoppelt werden kann, so dass ein problemloses Nachrüsten des Schalthebels 1 mit integrierter Fernbedienung möglich ist.

Durch die Ausbildung eines Schalthebels 1 mit Bedienungselementen 2 einer Fernbedienung und einer integrierten Sendeeinheit ist es möglich, auf ergonomische und ästhetische Art und Weise die Platzprobleme für die Festmontage, insbesondere bei einer Nachrüstung, einer Fernbedienung in einem Automobil zu verwirklichen. Der Schalthebel 1 befindet sich traditionsgemäß an einem von dem Fahrer gut erreichbaren Ort innerhalb des Fahrzeuges, so dass außerhalb des Griffbereiches liegende Muttergeräte, beispielsweise Unterhaltungselektronik oder Navigationssysteme, leicht und sicher bedient werden können. Vorteilhafterweise werden für den Signaltransfer von der Fernbedienung zum Muttergerät richtungsungebundene Signale einer Bluetooth-Schnittstelle benutzt.

## Patentansprüche

1. Schalthebel für ein Kraftfahrzeuggetriebe, wobei der Schalthebel (1) Bedienungselemente (2) einer Fernbedienung für Muttergeräte der Unterhaltungs-und/oder Informationselektronik aufweist, **dadurch gekennzeichnet, dass** auf der Schalthebeloberseite Richtungstasten (2) zur Auswahl eines Menüs oder zu einer Orientierung in einer Auswahlstruktur versenkt montiert angeordnet sind und dass an einer linken, konkaven Seitenfläche des Schalthebels (1) Bedienelemente (2) zur Steuerung von Grundfunktionen eines Radios versenkt montiert angeordnet sind.

2. Schalthebel nach einem der voranstehenden Ansprüche, **dadurch gekennzeichnet, dass** eine Abdeckvorrichtung (3) für die Bedienungselemente (2) an der Schalthebeloberseite (1) vorgesehen ist.

3. Schalthebel nach Anspruch 2, **dadurch gekennzeichnet, dass** die Abdeckeinrichtung (3) als eine verschiebbare Jalousie ausgebildet ist.

4. Schalthebel nach einem der voranstehenden Ansprüche, **dadurch gekennzeichnet, dass** eine Sendeschnittstelle (5) für eine drahtlose Signalübertragung zum Muttergerät in den Schalthebel integriert ist.

5. Schalthebel nach Anspruch 4, **dadurch gekennzeichnet, dass** die Schnittstelle (5) als Bluetooth-Schnittstelle ausgebildet ist.

6. Schalthebel nach einem der voranstehenden Ansprüche, **dadurch gekennzeichnet, dass** der Schalthebel (1) als nachrüstbares Zubehörteil mit integrierter Sendeeinrichtung ausgebildet ist.

7. Schalthebel nach Anspruch 6, **dadurch gekennzeichnet, dass** der Schalthebel (1) eine integrierte Energieversorgung oder Anschlusselemente zu einem Kraftfahrzeugenergiesystem aufweist.

## Claims

1. Gearshift lever for a motor vehicle gearbox, with the gearshift lever (1) having operator control-system elements (2) of a remote-control arrangement for master devices of the entertainment and/or information electronics system or systems, **characterized in that** directional keys (2) for selecting a menu or for navigating through a selection structure are recessed in the upper face of the gearshift lever, and **in that** operator control elements (2) for controlling basic functions of a radio are recessed on the left-hand, concave side area of the gearshift lever (1).

2. Gearshift lever according to Claim 1, **characterized in that** a covering apparatus (3) for the operator control-system elements (2) is provided on the upper face of the gearshift lever (1).

3. Gearshift lever according to Claim 2, **characterized in that** the covering device (3) is in the form of a moveable shutter.

4. Gearshift lever according to one of the preceding claims, **characterized in that** a transmission interface (5) for transmitting signals to the master device in a wire-free fashion is integrated in the gearshift lever.

5. Gearshift lever according to Claim 4, **characterized in that** the interface (5) is in the form of a Bluetooth interface.

6. Gearshift lever according to one of the preceding claims, **characterized in that** the gearshift lever (1) is in the form of an accessory which can be retrofitted and has an integrated transmission device.

7. Gearshift lever according to Claim 6, **characterized in that** the gearshift lever (1) has an integrated power supply arrangement or connection elements to a motor vehicle power system.

## Revendications

1. Levier de changement de vitesses pour une boîte de vitesses de véhicule, le levier (1) comprenant des éléments de commande (2) d'une télécommande pour des appareils principaux de l'électronique d'entretien et/ou d'information,
**caractérisé en ce que**
des touches directionnelles (2) en creux sont disposées sur la face supérieure ce levier de changement de vitesses pour la sélection d'un menu ou pour une orientation dans une structure de sélection, et des éléments de commande (2) en creux sont disposés sur une face latérale concave gauche du levier de changement de vitesses (1) pour la commande de fonctions de base d'une radio.

2. Levier de changement de vitesses selon la revendication précédente,
**caractérisé en ce qu'**
un dispositif de recouvrement (3) pour les éléments de commande (2) est prévu sur la face supérieure du levier de changement de vitesses (1).

3. Levier de changement de vitesses selon la revendication 2,
**caractérisé en ce que**
le dispositif de recouvrement (3) est réalisé sous la forme d'un volet coulissant.

4. Levier de changement de vitesses selon l'une quelconque des revendications précédentes,
**caractérisé en ce qu'**
une interface d'émission (5) pour une transmission de signal sans fil vers l'appareil principal est intégrée dans le levier de changement de vitesses.

5. Levier de changement de vitesses selon la revendication 4,
**caractérisé en ce que**
l'interface (5) est réalisée comme interface Bluetooth.

6. Levier de changement de vitesse selon l'une quelconque des revendications précédentes,
**caractérisé en ce que**
le levier de changement de vitesses (1) est réalisé sous la forme d'un accessoire de complément avec un dispositif d'émission intégré.

7. Levier de changement de vitesses selon la revendication 6,
**caractérisé en ce que**
le levier de changement de vitesses (1) comprend une alimentation en énergie intégrée ou des éléments de raccordement vers un système d'énergie du véhicule automobile.
